# EUROPEAN PATENT APPLICATION

(11) **EP 4 787 806 A1**
(43) Date of publication of application: **05.08.2026**
(21) Application number: 26153129.7
(22) Date of filing: 21.01.2026
(51) Int. Cl.: H04L 45/64, H04L 45/7453, H04L 69/22

(54) **STATELESS SOFTWARE DEFINED NETWORKING FLOW SPLITTER**

(30) Priority: 31.01.2025 US 202519043310
(71) Applicant: Microsoft Technology Licensing, LLC, Redmond, WA 98052-6399 (US)
(72) Inventor: Tewari, Rishabh, 98052 Redmond, WA (US); Zygmunt, Michal Czeslaw, 98052 Redmond, WA (US); Grantham, James A., 98052 Redmond, WA (US); Shrivastava, Pranjal, 98052 Redmond, WA (US); Motwani, Neeraj, 98052 Redmond, WA (US); Degrace, Gerald Roy, 98052 Redmond, WA (US)
(74) Representative: Grünecker Patent- und Rechtsanwälte PartG mbB

(57) **Abstract**

A system processes encapsulated packets by computing a hash from the inner packet's IP header values, selecting, based on the hash, an appliance IP address (AIPA) from a group of AIPAs, and replacing the outer packet's destination IP address with the selected AIPA before forwarding the packet to the corresponding network appliance. In another aspect, a method for applying a user-defined policy involves receiving the policy which identifies traffic subject to the policy and a rule to be enforced on the traffic. Based on the policy, a group of AIPAs is determined and appliances associated with the group of AIPAs are configured to enforce the policy. The first hop switch is then configured with the AIPAs, enabling it to select an AIPA address based on a hash and replace the outer destination IP address of the traffic with the selected virtual IP address.

## Description

### BACKGROUND

Subscribers to cloud computing services are responsible for ensuring their applications are resilient against malicious attacks, hardware failures, or software or configuration errors. One tool for ensuring resilience is to impose policies on network traffic. Such policies include, but are not limited to, intrusion prevention and detection, encryption/decryption gateways, distributed denial of service protection, web service proxy caches, traffic shapers, network monitoring, data loss prevention, geofencing, wide area network optimizers, failover and disaster recovery systems, firewall restrictions, packet filtering, application-level load balancing, etc.

Imposing such policies often requires, in a manner not visible to cloud subscribers, the imposition of virtual or physical appliances (also referred to as virtual or physical network functions) to enforce such policies. Such appliances may be configured as multi-tenant network appliances capable of imposing different policies for different tenants, and even for different classes of flows for an individual tenant. However, each network appliance, and network interfaces therefor, have bandwidth constraints that may be exceeded by subscriber traffic.

### SUMMARY

Example solutions for distributing overlay network flows to a plurality of network appliances are described herein. The disclosed examples are described in detail below with reference to the accompanying drawing figures listed below. The following summary is provided to illustrate some examples disclosed herein.

In certain examples, a system configured to receive an encapsulated packet having an inner packet header with internet protocol (IP) header values and an outer packet header with IP header values including an underlay source IP address and an underlay destination IP address. A hash is computed based on the IP header values of the inner packet header and, based on the hash, an appliance IP address (AIPA) is selected from a group of AIPAs. The underlay destination IP address of the outer packet header is then replaced with the selected AIPA and the encapsulated packet is forwarded to a network appliance corresponding to the selected AIPA.

In another example, a method for applying policies to network traffic includes receiving a network policy from a user that includes an identification of traffic subject to the network policy and a rule to be enforced on the traffic. Responsive to receiving the policy, a group of AIPAs associated with appliances for enforcing the policy are determined. The number of IP addresses in the group of AIPAs is based on a bandwidth consumption associated with the traffic. Also, in response to receiving the policy the appliances are configured to apply the rule to the traffic. Finally, a first hop switch is configured with the group of AIPAs, which causes the first hop switch to (i) select a virtual IP address from the group of virtual IP addresses based on a hash computed from an overlay packet header value of the traffic, and (ii) replace an outer destination IP address of the traffic with the selected virtual IP address.

### BRIEF DESCRIPTION OF THE DRAWINGS

The disclosed examples are described in detail below with reference to the accompanying drawing figures listed below:
FIG. 1 shows by way of example a schematic representation of a system for distributing overlay network flows across a plurality of appliances.
FIG. 2 shows a schematic diagram illustrating a modification of an initial encapsulated packet to form a modified encapsulated packet based on overlay network header values.
FIG. 3 shows a flowchart illustrating by way of example a procedure for distributing overlay network flows across a plurality of target appliance IP addresses.
FIG. 4 is a flowchart illustrating by way of example another procedure to be carried out by first hop switch.
FIG. 5 is a flowchart illustrating by way of example a procedure for translating a policy configuration received by manager into corresponding configurations for a first hop switch and appliances.
FIG. 6 is a flowchart illustrating by way of example a procedure for elastic scaling of bandwidth capacity by adding and removing appliances based on changing bandwidth requirements for the traffic subject to a policy.
FIG. 7 shows a block diagram illustrating by way of example symmetric redirection of packets to a common appliance, so that all packets belonging a particular bidirectional flow are passed to the same intermediate appliance.
FIG. 8 is a block diagram of an example computing device for implementing aspects disclosed herein.

Corresponding reference characters indicate corresponding parts throughout the drawings. Any of the figures may be combined into a single example or embodiment.

### DETAILED DESCRIPTION

Virtual networks, also referred to as "overlay networks," or "software-defined networks" are decoupled from the underlying physical network infrastructure using network packet encapsulation. The term, "network packet" refers herein to a structured unit of data transmitted over a network that contains control information and user data, enabling communication between devices, regardless of the protocol, and includes frames, segments, datagrams, etc. An overlay network packet addressed from one virtual endpoint to another virtual endpoint on the same overlay network is configured independently of the underlying physical network infrastructure and is not directly routable over the underlay network. Therefore, prior to transmission of the overlay packet on the physical network, the overlay network packet is encapsulated within an outer packet header, also referred to herein as an "underlay network header," that is routable across the physical network such that the original overlay network packet becomes payload of the outer/underlay network packet.

A flow is a sequence of packets sent between a single source and a single destination over a computer network. Flows are characterized by a set of common attributes that group them as a logical connection or conversation and can be unidirectional or bidirectional. A flow is generally identified by a 5-tuple including a source internet protocol (IP) address, a destination IP address, a source port number, a destination port number, and a protocol (e.g., transmission control protocol, user datagram protocol, internet control message protocol). Additional attributes (e.g., virtual local area network (VLAN) tag), different, or fewer attributes can be used to identify the flow, based on circumstances. It is generally desirable for packets belonging to a flow to be delivered in a consistent manner to reduce the likelihood that the packets of the flow will be delivered to the destination endpoint out of sequence.

The presently described technology provides substantially infinite bandwidth capacity for processing subscriber network traffic between virtual endpoints according to a subscriber-defined policy. As used herein, the term, "virtual endpoint" refers to an entity that has a distinct network identity, such as an IP address, within a virtual network. Virtual endpoints include virtual machines, containerized applications, serverless functions, application services, load balancers and gateways, and other devices with virtual network integration.

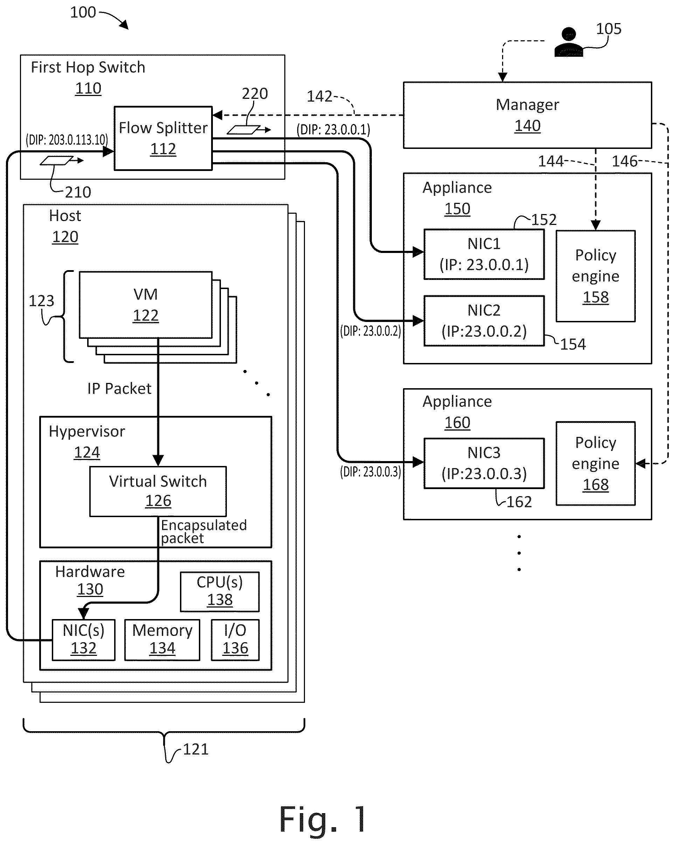

FIG. 1 shows by way of example a schematic representation of a system 100 for distributing overlay network flows across a plurality of appliances. System 100 includes a host 120, a first hop switch 110, a manager 140, and appliances 150, 160. In an illustrative implementation, host 120 is one of a plurality of hosts 121 arranged on a physical rack within a datacenter, and first hop switch 110 is connected via ethernet cables to hosts 121. In a typical example, first hop switch 110 is a top-of-rack (ToR) switch. Although referred to as a "top-of-rack" switch, first hop switch 110, in illustrative implementations, is located anywhere within the rack or on another rack nearby to hosts 121.

Host 120 includes physical compute resources or hardware 130 comprising CPUs 138, memory 134, and input/output (I/O) hardware 136, and one or more network interfaces ("NICs") 132. System level software including an operating system (not separately shown) and hypervisor 124 support execution of a plurality of VMs 123, including VM 122. In alternate use cases, other virtual endpoints such as containerized applications, serverless functions, etc., are hosted on host 120 instead of, or in addition to, VMs 123. Hypervisor 124 provides an isolated execution environment for VMs 123 and includes a virtual switch 126. In alternative environments, virtual switch 126 may be integrated with other system level software such as the operating system. Virtual switch 126 includes or is associated with a network packet encapsulation/decapsulation component (not separately shown) for encapsulating egress packets and decapsulating ingress packets so that overlay network packets can be forwarded on the underlying physical network infrastructure as described hereinbelow.

First hop switch 110, in an illustrative embodiment, comprises a programmable top-of-rack smart switch that is capable of Layer 2 or Layer 3 forwarding operations. The phrase "first hop" refers to switch 110 being connected directly to host 120 with no intermediate packet forwarding devices. The Open Systems Interconnection (OSI) model is a conceptual framework for understanding how data flows through the network and includes several network abstraction layers. Layer 2 (L2) of the OSI model is responsible for enabling data transfer between devices on the same network or network segment/subnet. L2 forwarding uses media access control (MAC) addresses within L2 headers to identify devices on the L2 network. Switch 110 can perform "switching" by forwarding packets between hosts 121 that lie on the same physical subnet without relying on L3 headers of the packets. L3 is the "network" layer, which uses internet protocol (IP) addresses to uniquely identify endpoints across the network. Switch 110 is, in an illustrative embodiment, capable of forwarding packets based on either L2 or L3 packet headers and is therefore an "L3 switch."

First hop switch 110 includes flow splitter 112, which is configured to redirect packets to one or more of a plurality of appliances 150, 160 based on overlay packet header values. Flow splitter 112 performs consistent distribution of packet flows to appliances 150, 160 without maintaining flow state information. Consistent distribution means that all packets belonging to a particular flow are sent to the same appliance. In an embodiment, such stateless operation is achieved by computing a hash from overlay network header values and then modifying underlay header values to redirect the packet based on the hash.

Appliances 150 and 160 are in alternative embodiments multi-tenant or single-tenant scale-out devices each capable of handling a maximum bandwidth of traffic. In an illustrative example, appliance 150 includes two network interfaces (NICs) 152, 154, each capable of sending or receiving data at a rate of 100 gigabits per second (Gbps). Appliances 150, 160 each have bandwidth capacities that are limited by NICs 152, 154, 162, or by the memory and processing capabilities of the appliances, wherein the processing includes the number and type of processors, presence of and capabilities of network accelerator co-processors, and/or ASIC circuits (not shown) within appliances 150, 160. Due to these bandwidth limitations, traffic associated with a particular policy is distributed using flow splitter 112 across appliances 150, 160 to accommodate bandwidth requirements that exceed the capabilities of any one particular appliance.

Manager 140 receives policy definitions from user 105 and distributes the policies to appliances 150, 160 via control channels 144, 146, and in addition configures flow splitter 112 via control channel 142 to perform the flow splitting operation and described in more detail below. In an illustrative embodiment, manager 140 is deployed with scalable infrastructure and associated with appropriate firewalls, load balancers, and so forth as appropriate. The term "scalable infrastructure" can refer to any sort of infrastructure in which multiple instances of an application, or component thereof, is replicated and scaled-out to accommodate increasing loads, and likewise, removed from service in response to decreasing loads. Scalable infrastructures include virtualization-based technologies including hardware server virtualization and containerization. In some examples, manager 140 is cloud-based, i.e., executes in a cloud or datacenter environment, e.g., using scalable infrastructure.

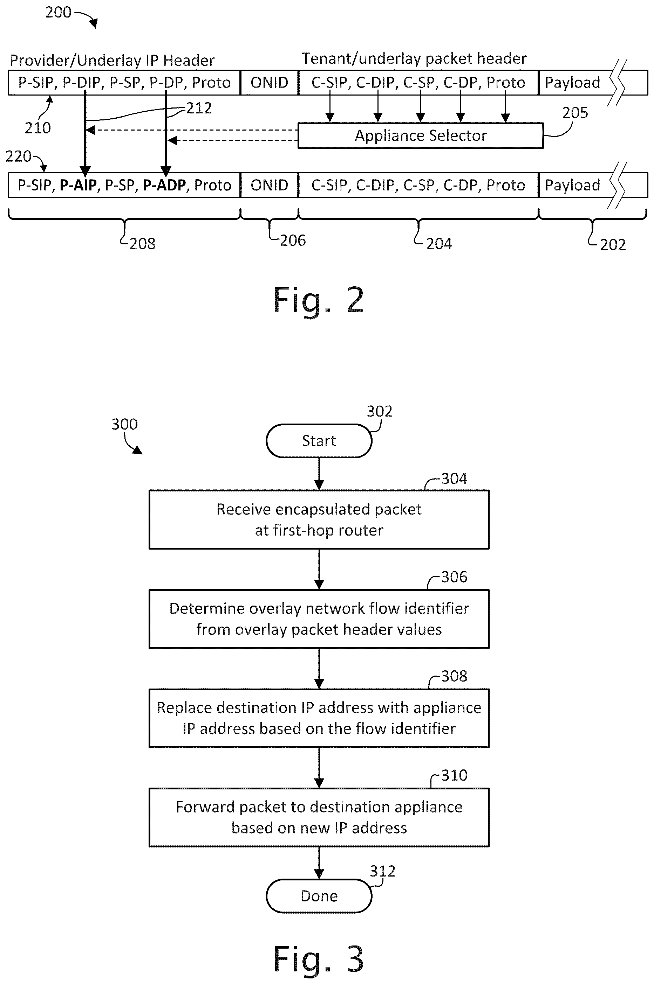

FIGs. 1-3 are referenced in the following explanation of the operation of flow splitter 112 of first hop switch 110. FIG. 2 shows a schematic diagram 200 illustrating a modification of an initial encapsulated packet 210 to form modified encapsulated packet 220 based on overlay network header values 204. FIG. 3 shows a flowchart illustrating by way of example a procedure 300 for distributing overlay network flows across a plurality of target appliance IP addresses.

Referring to FIG. 3, procedure 300 starts as indicated by start block 302 and proceeds to operation 304 wherein a packet is received. For purposes of explanation and illustration, an example encapsulated packet 210 is shown in FIGs. 1 and 2. Encapsulated packet 210 comprises a data payload 202, an overlay header 204, an overlay network identifier ("ONID") 206, and an underlay network header 208. The overlay network packet as originally transmitted by VM 122 comprises overlay network header 204 and payload 202 is "encapsulated" by virtual switch 126, the overlay network packet is encapsulated before transmission over the physical network infrastructure (including first hop switch 110) by an encapsulation header comprising overlay network identifier 206 and underlay network header 208. Each header portion, 208, 206, and 204, are simplified for clarity, as it should be recognized that these packet headers will include additional header values not shown, and the precise combination of header values will vary depending on the protocols for the underlying physical network, the encapsulation (also referred to as "tunneling"), and the overlay network. As illustrated in FIG. 1 and as an illustrative example, packet 210 has a destination IP address of "203.0.113.10."

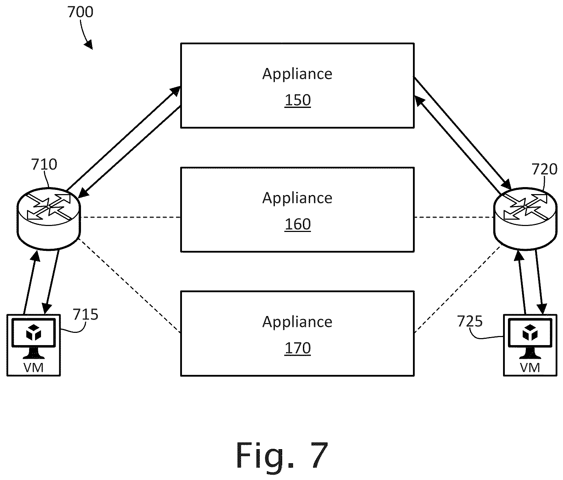

Upon receipt of encapsulated packet 210 described with reference to operation 304, the procedure 300 proceeds with operation 306, in which hash is determined based on header values of the overlay network header 204. FIG. 2 shows the operation of flow splitter 112 of FIG. 1, including an appliance selector function 205. In an illustrative example, appliance selector 205 receives overlay source IP address, ("C-SIP"), overlay destination IP address ("C-DIP"), overlay source port number ("C-SP"), overlay destination port number ("C-DP"), and overlay network protocol ("Proto"), and uses these values as input to a hash algorithm (e.g., a 32-bit cyclic redundancy check (CRC32), message-digest algorithm 5 (MD5), Secure Hash Algorithm 1 or 2 (SHA-1, SHA-2), BLAKE2/BLAKE3, or non-cryptographic hashes such as MurmerHash, CityHash, FarmHash, xxHash, etc.) to compute a hash. In an example implementation, the hash algorithm is a simple checksum or field concatenation, although hash algorithms that are highly entropic are preferred to ensure a more uniform distribution of flows. In encapsulated packets 210, 220 illustrated in FIG. 2, the prefix "C" for the header value labels refers to the overlay network header values being customer-defined. In an implementation, and as described in further detail below with reference to FIG. 7, in an embodiment, the hash is calculated so as to be symmetric with respect to the flow direction. In other words, the hash is calculated in such a manner as to generate the same value regardless of whether the source and destination IP addresses and port numbers are swapped, as would be the case for return traffic flowing in the opposite direction. In an alternate implementation where symmetric flows are not required, the hash is calculated without regard to ensuring symmetric flows.

Appliance selector 205 uses the hash to select one of the several appliance IP addresses to which the encapsulated packet is to be redirected. In an example implementation, the hash is divided by the total number of target appliance IP addresses and the remainder is used as an identifier of a corresponding one of the target appliance IP addresses. Flow splitter 112 then, in operation 308 and based on the selection by appliance selector 205, replaces the underlay network destination address (e.g., provider destination IP ("P-DIP") and/or provider destination port ("P-DP") with provider appliance IP ("P-AIPA") and provider appliance destination port ("P-ADP") to generate a modified encapsulated packet 220. As shown in FIG. 1, modified encapsulated packet 220 includes a new destination IP address "23.0.0.1" which is the address of NIC 152 of appliance 150.

In operation 310, the modified encapsulation packet 220 is then forwarded to the target interface of the target appliance based on the new destination IP address. The procedure then ends as indicated by done block 312.

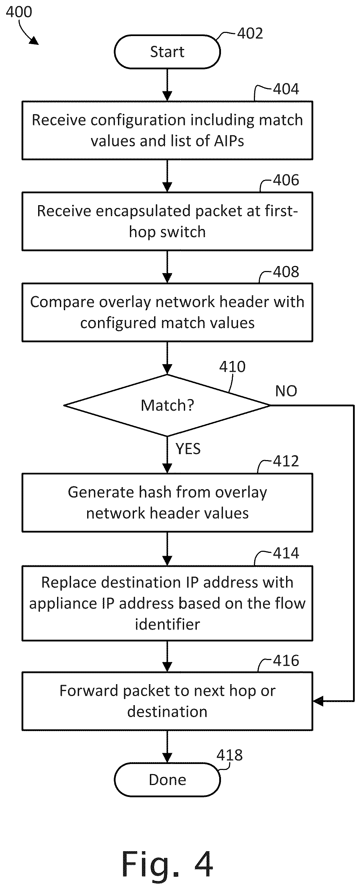

FIG. 4 is a flowchart illustrating by way of example another procedure to be carried out by first hop switch 110 (FIG. 1). Procedure 400 begins at start block 402 and flows to operation 404 wherein a configuration is received from manager 140. The configuration includes a definition of designated traffic to be subject to a policy and a list of appliance IP addresses (AIPAs) corresponding to appliances configured to apply the policy to the designated traffic.

In an embodiment, the definition of the designated traffic comprises one or more match values or match ranges. In an example use case, the policy defined by user 105 is designated to be applied only on traffic having destination IP addresses for the overlay network that falls within a provided range of destination IP addresses. In an embodiment, the user 105 can specific the traffic to which the policy is to be applied by providing an alias or a property of a target endpoint which is then translated by manager 140 to match values that correspond to the alias. In an example use case, the user 105 specifies all "web-app" traffic, which is then translated using a pre-configured alias definition as all traffic to or from a set of match values for source or destination IP addresses that correspond to a set of web application servers. The designated traffic is defined as a destination port number or a range of destination port numbers. In any case, the traffic to be subjected to the policy is defined by one or more match values or match ranges that are compared with overlay network header parameters such as source or destination IP addresses, port numbers, and so forth.

The configuration also includes a list of AIPAs, which comprises a plurality of IP addresses corresponding to network interfaces, e.g., NICs 152, 154, 162 for appliances 150, 160.

In operation 406, an encapsulated packet is received at the first hop switch 110 and in response to the receipt of the encapsulated packet, the overlay network headers are compared with the match values in operation 408.

In operation 410, it is determined if the overlay network header values for the packet received in operation 406 matches the match values/ranges of the configuration received in operation 404. If not, then procedure 400 jumps to operation 418 which is described below. If the overlay network header values in the encapsulated packet do match the match values/ranges, then the procedure flows to operation 412, wherein a hash is generated from the overlay network header values of the encapsulated packet. Methods of generating a hash are described above with reference to FIGs. 1-3.

After a hash is generated, in operation 414, the hash is used to select an appliance IP address from the list of AIPAs provided with the configuration in operation 404, and then flow splitter 112 replaces the destination IP of the underlay packet headers (i.e., the outer packet header with the selected target appliance IP address as previously described with reference to FIG. 2) to generate a modified encapsulated packet 220. Procedure 400 then proceeds to operation 416 wherein the modified encapsulation packet is forwarded towards the target appliance. The procedure then ends as indicated by done block 418.

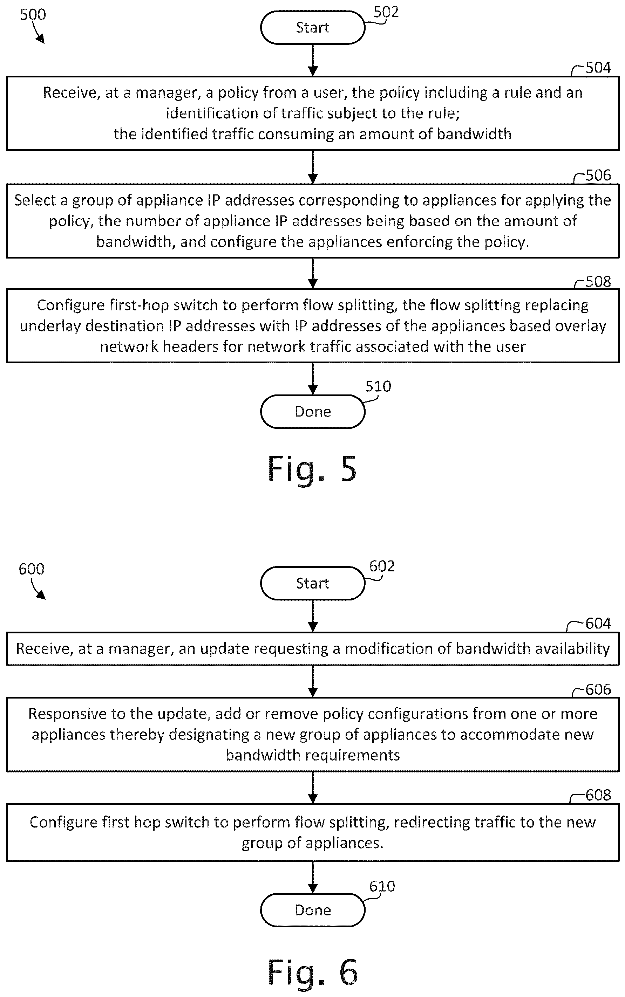

FIG. 5 is a flowchart illustrating by way of example a procedure 500 for translating a policy configuration received by manager 140 into corresponding configurations of first hop switch 110 and appliances 150, 160. Procedure 500 begins at start block 502 and flows to operation 504 wherein a policy configuration is received from a user. The policy configuration comprises at least a rule and an identification of traffic subject to the rule. An example might be any traffic sent from a first virtual endpoint to a second virtual endpoint that is not encrypted using IPsec encryption protocol is to be dropped. The traffic subject to the rule is all traffic originating at the first virtual endpoint and addressed to the second virtual endpoint and can be designated with match values with the overlay source IP address matching the IP address of the first virtual endpoint and the overlay destination IP address matching the IP address of the second virtual endpoint. In an example implementation, the configuration received by manager 140 can include explicitly defined match values or match ranges. The values or ranges are provided via an interface, such as an application programming interface (API) that is exposed by manager 140. In an implementation, match values and/or ranges are inferred from provided aliases as previously described.

Upon receipt of the policy and in response thereto, procedure 500 proceeds to operation 506, wherein a group of appliance IP addresses (AIPAs) are selected for receiving packets subject to the received policy. Each of the AIPAs are associated with a respective appliance 150, 160 as previously described. In one implementation, the number of AIPAs in the group of AIPAs is based on an amount of bandwidth associated with the traffic subject to the policy. For example, the amount of bandwidth currently being consumed by the subject traffic is measured using existing network monitoring mechanisms. Alternatively, the amount of bandwidth associated with the traffic subject to the policy is a maximum expected bandwidth consumption specified in the policy configuration. In an example implementation, the user identifies a maximum expected bandwidth consumption to be 250 mbps, and based on NICs 152, 154, and 162 each having a bandwidth capacity of 100 mbps, three AIPAs are determined to be required to manage the expected maximum bandwidth capacity, with the group of AIPAs being (23.0.0.1, 23.0.0.2, 23.0.0.3), based on an unallocated (i.e., available) bandwidth of these interfaces. Upon selection of these interfaces, appliances 150, 160 are configured with the rule specifying that traffic between the first and second virtual endpoints is dropped unless encrypted. Appliances 150, 160 are configured to therefore, using available packet inspection techniques, identify whether IPsec encryption headers are included in the subject overlay network traffic and drop the packets if no such encryption headers are present.

In operation 508, first hop switch 110 is configured to perform flow splitting causing traffic subject to the policy to be redirected to one of the AIPAs so that the policy can be enforced by appliances 150, 160. In an embodiment, a set of match values (e.g., source and destination IP addresses) and the group of APIs are transmitted to an API exposed by flow splitter 112 in first hop switch 110. Upon configuration of the first hop switch in operation 508, the procedure ends as indicated by done block 510.

It should be appreciated that, by configuring first hop switch 110 with match values and a group of AIPAs, first hop switch 110 need not maintain any flow state information to perform consistent flow splitting.

FIG. 6 is a flowchart illustrating by way of example a procedure 600 for elastic scaling of bandwidth capacity by adding and removing AIPAs based on changing bandwidth requirements for the traffic subject to a policy. Procedure 600 begins as indicated at start block 602 and proceeds to operation 604 wherein an update is received by manager 140 requesting a modification of bandwidth availability. The update may originate from a number of sources. In an example implementation, appliances 150, 160, are configured to communicate an alert to manager 140 when received traffic is above a threshold, e.g., when received traffic exceeds 80% of the appliance's capacity for a threshold amount of time, e.g., for more than 300 seconds in the previous 15 minutes. Appliances 150, 160 are likewise configured to send an alert if they detect significant unused network bandwidth, e.g., consumed bandwidth drops below 30% for more than 5 consecutive minutes. In such a case, manager 140 may interpret such an alert to be a request to modify the bandwidth availability when one or more AIPAs can be removed from the group of AIPAs designated for the policy without significant risk of under-provisioning resources to process the identified traffic.

In another example, an updated maximum bandwidth configuration is received from user 105 that is interpreted as an adjustment to an allocated capacity of appliances 150, 160. In yet another example, a network monitor (not shown) detects under- or over-provisioning of appliance resources and generates the update in response thereto.

In operation 606, responsive to the receipt of the update in operation 604, one or more AIPAs are selected to be added or removed from the group of AIPAs. An appliance that is no longer associated with the group of AIPAs has its policy configuration removed. If an additional one or more AIPAs are added to the group of AIPAs, then the policy configuration, e.g., as described above with reference to FIG. 5, is added to one or more additional appliances associated with the added AIPAs. If one or more AIPAs are removed from the group of AIPAs, then the policy configuration is removed from one or more appliances associated with the removed AIPAs. As a result, the group of appliances is correctly sized to accommodate the bandwidth update.

In operation 608, the first hop switch (or switches) is configured to perform flow splitting as previously described. The procedure then ends as indicated by done block 610.

When the group of appliances are modified for a set of flows, there may be a period wherein packets arrive at the wrong appliance due to the mechanism of distributing flows using a hash generated by hashing overlay network header values. During this time, it may be necessary for appliances 150, 160 to redirect packets from one appliance to the correct appliance. In this case, the appliances are configured with the hashing algorithm to generate the hash as well as receiving configuration information regarding the group of appliances and the consistent redirection algorithm based on the hash. Upon receipt of a packet, each appliance computes the hash and confirms that it correctly received the packet. If not, the appliance redirects the packet to the correct appliance by replacing the underlay destination IP address of the packet and forwarding the packet to the correct appliance.

FIG. 7 shows a block diagram 700 illustrating by way of example symmetric redirection of packets to a common appliance, so that all packets belonging a particular bidirectional flow are passed to the same intermediate appliance. Diagram 700 shows first and second hosts 715, 725 each having a virtual machine ("VM") residing therein. Hosts 715, 725 are connected to first hop switches 710, 720, respectively. First hop switches 710, 720 comprise Layer 3 routers and include flow splitters (not shown) as described above with reference to FIG. 1. Interposed between first hop switches 710, 720 are several appliances 150, 160, 170. Appliances 150, 160, 170 are implemented as physical or virtual appliances and each are associated with one or more AIPAs as previously described.

Additional network infrastructure may be interposed between first hop switches 710, 720 and appliances 150, 160, 170 than shown. For example, additional routers, gateways, tunnels, and appliances may be connected between one or more of appliances 150, 160, and 170. For packets subject to a configured policy, each first hop switch 710 and 720 implement the same hashing algorithm to compute the same hash, regardless of the direction of travel (i.e., forward or reverse) of the packet for the bidirectional flow. As previously described, in an example embodiment, source and destination addresses are ordered according to a sorting algorithm (e.g., by placing the lower-valued address first, then the higher-valued address) prior to concatenating the header values into an input string into the hash algorithm to compute the hash. Furthermore, first hop switches 710, 720 are configured to ensure that each hash maps to a consistent one of the AIPAs associated with appliances 150, 160, 170. For example, first hop switches 710, 720 may be programmed to sort the AIPAs into ascending order and numbered accordingly, e.g., 0-2. Then the hash is divided by three and the remainder, 0-2 is mapped to the correspondingly numbered AIPA. In another example, hash-to-appliance mappings are determined centrally by manager 140 and distributed to first hop switches 710, 720 along with the AIPA grouping information. These mechanisms are examples of how return traffic for a particular flow is ensured to be passed through the same appliance 150 as traffic in the forward direction for the same flow. This ensures that flow state information determined from forward-direction traffic is available when processing return traffic and vice versa.

### Additional Examples

An example system is configured to: receive an encapsulated packet, the encapsulated packet having an inner packet header with internet protocol (IP) header values including an overlay source IP address and an overlay destination IP address, and an outer packet header with IP header values including an underlay source IP address and an underlay destination IP address; compute a hash based on the IP header values of the inner packet header; select an appliance IP (AIPA) address from a group of AIPA addresses based on the hash; replace the underlay destination IP address of the outer packet header with the selected AIPA address to form an updated encapsulated packet; and forward the updated encapsulated packet to a network appliance corresponding to the selected AIPA address.

An example computerized method for applying policies to network traffic comprises: receiving a network policy from a user, the network policy including an identification of traffic subject to the network policy and a rule for enforcing on the traffic; responsive to the receiving of the network policy: selecting a group of appliance IP addresses (AIPAs) associated with appliances for enforcing the network policy, a number of AIPAs in the group of AIPAs being based on an amount of bandwidth associated with the traffic; configuring the appliances to apply the rule to the traffic; and applying a configuration to a first hop switch, the configuration including the group of AIPAs, the configuration causing the first hop switch to (i) select an AIPA from the group of AIPAs based on a hash value computed from an overlay packet header of the traffic, and (ii) replace an outer destination IP address of the traffic with the selected AIPA.

An example computer readable data storage medium embodying program instructions for execution by a processor, the program instructions causing the processor to: receive, from a user, a network policy, the network policy including an identification of traffic subject to the network policy and a rule to be enforced on the traffic; responsive to the receiving of the policy: select a group of appliance IP addresses (AIPAs) associated with appliances for enforcing the policy, a number of AIPAs in the group of AIPAs being based on an amount of bandwidth consumed by the traffic; configure the appliances to apply the rule to the traffic; and apply a configuration to a first hop switch, the configuration including a group of AIPAs, the configuration causing the first hop switch to (i) select an AIPA from the group of AIPAs based on a computation of a hash from an overlay packet header value of the traffic, and (ii) replace an outer destination IP address of the traffic with the selected AIPA.

Alternatively, or in addition to the other examples described herein, examples include any combination of the following:
- wherein the system is a programmable smart switch comprising a memory and a processor configured to execute instructions stored by the memory, the instructions causing the system to perform the computing of the hash, the selecting of the AIPA based on the hash, and the replacing of the underlay destination IP address with the selected AIPA.
- wherein the hash is computed based at least on the overlay source IP address and the overlay destination IP address and is symmetric, such that a same hash value is generated when the overlay source IP address and the overlay destination IP addresses are swapped with each other.
- wherein the hash is based on a 5-tuple of the inner packet header including the overlay source IP address, the overlay destination IP address, an overlay source port, an overlay destination port, and a protocol.
- further comprising receiving the group of AIPAs from a manager, the AIPAs in the group of AIPAs corresponding to appliances, a number of the AIPAs in the group of AIPAs determined based on a bandwidth requirement.
- wherein the system is a top-of-rack switch and the encapsulated packet is received from a host in direct communication with the top-of-rack switch.
- wherein the network policy further includes an identification of a maximum bandwidth for the traffic, and a number of IP addresses in the group of IP addresses is based on the maximum bandwidth for the traffic.
- wherein the identification of the traffic includes match values, the first hop switch is selected based on the identification of the traffic, the configuration of the first hop switch causing the first hop switch to identify the traffic based on the match values, wherein only the traffic identified using the matched values is modified with the selected AIPA.
- the identification of the traffic includes identifiers for a source endpoint and a destination endpoint, the first hop switch is a router for a subnet associated with the source endpoint; and the method further comprises applying the configuration to a second first hop switch, the second first hop switch being a router for a subnet associated with the destination endpoint; and, the configuration causing, for a particular flow that includes traffic from the source endpoint to the destination endpoint and return traffic from the destination endpoint to the source endpoint, the return traffic to pass through the selected AIPA.
- wherein the first hop switch is a layer 3 top-of-rack switch, the traffic comprising traffic originating from a virtual machine residing on a host in communication with the first hop switch.
- wherein the first hop switch is configured to compute hash values for the traffic based on an overlay source IP address, an overlay destination IP address, an overlay source port, an overlay destination port, and an overlay protocol of the packet, thereby consistently directing packets associated with a flow to the AIPA.
- wherein computed hash value is insensitive to a direction of the traffic such that the hash value is same after reversing source and destination IP addresses in the overlay packet header.
- further comprising, in response to an increase or decrease in bandwidth consumption of the traffic, adding or removing, respectively, one or more AIPAs from the group of AIPAs.
- further comprising configuring the appliances so that a particular appliance that receives the packet computes the hash value on the received packet to ensure that the received packet was correctly transmitted to the particular appliance and, in response to detecting that the packet was incoappliance.ransmitted to the particular appliance, to forward packet to the correct appliance
- wherein the identification of the traffic includes match values, the first hop switch is selected based on the identification of the traffic, and the configuration of the first hop switch causes the first hop switch to identify the traffic based on the match values, wherein only the traffic that is identified using the match values is modified with the selected AIPA.
- the identification of the traffic includes identifiers for a source endpoint and a destination endpoint; and the instructions are further configured to cause the processor to apply the configuration to a second first hop switch, the second first hop switch being a router for a subnet associated with the destination endpoint, the configuration causing, for a particular flow that includes traffic from the source endpoint to the destination endpoint and return traffic from the destination endpoint to the source endpoint, the return traffic to pass through the selected AIPA.
- wherein the instructions further cause the processor to, in response to an increase or decrease in bandwidth consumption of the traffic, add or remove, respectively, one or more AIPAs from the group of AIPAs.

While the aspects of the disclosure have been described in terms of various examples with their associated operations, a person skilled in the art would appreciate that a combination of operations from any number of different examples is also within scope of the aspects of the disclosure.

### Example Operating Environment

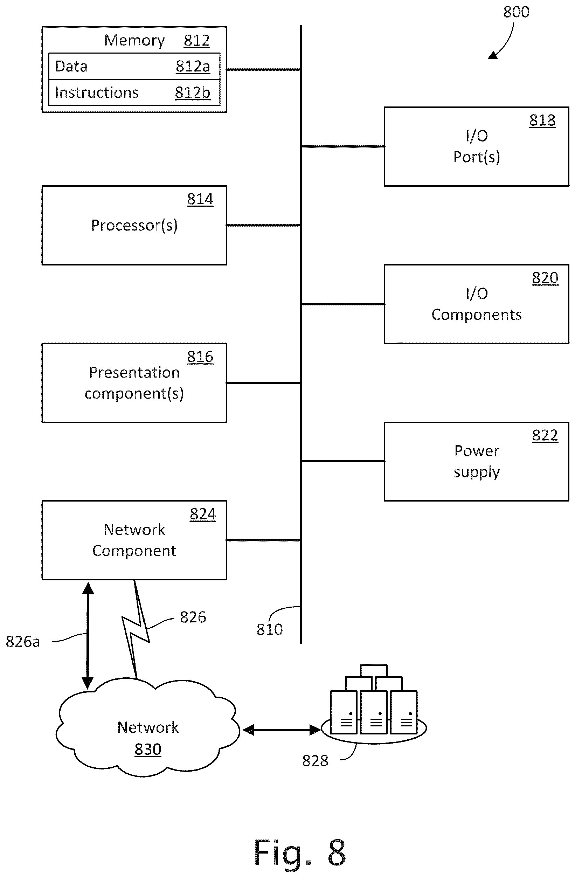

FIG. 8 is a block diagram of an example computing device 800 (e.g., a computer storage device) for implementing aspects disclosed herein, and is designated generally as computing device 800. In some examples, one or more computing devices 800 are provided for an on-premises computing solution. In some examples, one or more computing devices 800 are provided as a cloud computing solution. In some examples, a combination of on-premises and cloud computing solutions are used. Computing device 800 is but one example of a suitable computing environment and is not intended to suggest any limitation as to the scope of use or functionality of the examples disclosed herein, whether used singly or as part of a larger set.

Neither should computing device 800 be interpreted as having any dependency or requirement relating to any one or combination of components/modules illustrated. The examples disclosed herein can be described in the general context of computer code or machine-useable instructions, including computer-executable instructions such as program components, being executed by a computer or other machine, such as a personal data assistant or other handheld device. Generally, program components including routines, programs, objects, components, data structures, and the like, refer to code that performs particular tasks, or implement particular abstract data types. The disclosed examples can be practiced in a variety of system configurations, including personal computers, laptops, smart phones, mobile tablets, hand-held devices, consumer electronics, specialty computing devices, etc. The disclosed examples can also be practiced in distributed computing environments when tasks are performed by remote-processing devices that are linked through a communications network.

Computing device 800 includes a bus 810 that directly or indirectly couples the following devices: computer storage memory 812, one or more processors 814, one or more presentation components 816, input/output (I/O) ports 818, I/O components 820, a power supply 822, and a network component 824. While computing device 800 is depicted as a seemingly single device, multiple computing devices 800 can work together and share the depicted device resources. For example, memory 812 is distributed across multiple devices, and processor(s) 814 is housed with different devices.

Bus 810 represents one or more buses (such as an address bus, data bus, or a combination thereof). Although the various blocks of FIG. 8 are shown with lines for the sake of clarity, delineating various components can be accomplished with alternative representations. For example, a presentation component such as a display device is an I/O component in some examples, and some examples of processors have their own memory. Distinction is not made between such categories as "workstation," "server," "laptop," "hand-held device," etc., as all are contemplated within the scope of FIG. 8 and the references herein to a "computing device." Memory 812 can take the form of the computer storage media referenced below and operatively provide storage of computer-readable instructions, data structures, program modules and other data for the computing device 800. In some examples, memory 812 stores one or more of an operating system, a universal application platform, or other program modules and program data. Memory 812 is thus able to store and access data 812a and instructions 812b that are executable by processor 814 and configured to carry out the various operations disclosed herein.

In some examples, memory 812 includes computer storage media. Memory 812 can include any quantity of memory associated with or accessible by the computing device 800. Memory 812 can be internal to the computing device 800 (as shown in FIG. 8), external to the computing device 800 (not shown), or both (not shown). Additionally, or alternatively, the memory 812 can be distributed across multiple computing devices 800, for example, in a virtualized environment in which instruction processing is carried out on multiple computing devices 800. For the purposes of this disclosure, "computer storage media," "computer-storage memory," "memory," and "memory devices" are synonymous terms for the computer-storage memory 8012, and none of these terms include carrier waves or propagating signaling.

Processor(s) 814 includes any quantity of processing units that read data from various entities, such as memory 812 or I/O components 820. Specifically, processor(s) 814 are programmed to execute computer-executable instructions for implementing aspects of the disclosure. The instructions can be performed by the processor, by multiple processors within the computing device 800, or by a processor external to the client computing device 800. In some examples, the processor(s) 814 are programmed to execute instructions such as those illustrated in the flow charts discussed below and depicted in the accompanying drawings. Moreover, in some examples, the processor(s) 814 represent an implementation of analog techniques to perform the operations described herein. For example, the operations are performed by an analog client computing device 800 and/or a digital client computing device 800. Presentation component(s) 816 present data indications to a user or other device. Exemplary presentation components include a display device, speaker, printing component, vibrating component, etc. It should be understood that computer data can be presented in a number of ways, such as visually in a graphical user interface (GUI), audibly through speakers, wirelessly between computing devices 800, across a wired connection, or in other ways. I/O ports 818 allow computing device 800 to be logically coupled to other devices including I/O components 820, some of which can be built in. Example I/O components 820 include, for example but without limitation, a microphone, joystick, game pad, satellite dish, scanner, printer, wireless device, etc.

Computing device 800 can operate in a networked environment via the network component 824 using logical connections to one or more remote computers. In some examples, the network component 824 includes a network interface card and/or computer-executable instructions (e.g., a driver) for operating the network interface card. Communication between the computing device 800 and other devices can use any protocol or mechanism over any wired or wireless connection. In some examples, network component 824 is operable to communicate data over public, private, or hybrid (public and private) using a transfer protocol, between devices wirelessly using short range communication technologies (e.g., near-field communication (NFC), Bluetooth^{™} branded communications, or the like), or a combination thereof. Network component 824 communicates over wireless communication link 826 and/or a wired communication link 826a to a remote resource 828 (e.g., a cloud resource) across network 830. Various different examples of communication links 826 and 826a include a wireless connection, a wired connection, and/or a dedicated link, and in some examples, at least a portion is routed through the internet.

Although described in connection with an example computing device 800, examples of the disclosure are capable of implementation with numerous other general-purpose or special-purpose computing system environments, configurations, or devices. Examples of well-known computing systems, environments, and/or configurations that suitable for use with aspects of the disclosure include, but are not limited to, smart phones, mobile tablets, mobile computing devices, personal computers, server computers, hand-held or laptop devices, multiprocessor systems, gaming consoles, microprocessor-based systems, set top boxes, programmable consumer electronics, mobile telephones, mobile computing and/or communication devices in wearable or accessory form factors (e.g., watches, glasses, headsets, or earphones), network PCs, minicomputers, mainframe computers, distributed computing environments that include any of the above systems or devices, virtual reality (VR) devices, augmented reality (AR) devices, mixed reality devices, holographic device, and the like. Such systems or devices might accept input from the user in any way, including from input devices such as a keyboard or pointing device, via gesture input, proximity input (such as by hovering), and/or via voice input.

Examples are described in the general context of computer-executable instructions, such as program modules, executed by one or more computers or other devices in software, firmware, hardware, or a combination thereof. The computer-executable instructions can be organized into one or more computer-executable components or modules. Generally, program modules include, but are not limited to, routines, programs, objects, components, and data structures that perform particular tasks or implement particular abstract data types. Aspects of the disclosure can be implemented with any number and organization of such components or modules. For example, aspects of the disclosure are not limited to the specific computer-executable instructions or the specific components or modules illustrated in the figures and described herein. Other examples of the disclosure include different computer-executable instructions or components having more or less functionality than illustrated and described herein. In examples involving a general-purpose computer, aspects of the disclosure transform the general-purpose computer into a special-purpose computing device when configured to execute the instructions described herein.

By way of example and not limitation, computer readable media comprise computer storage media and communication media. Computer storage media include volatile and nonvolatile, removable and non-removable memory implemented in any method or technology for storage of information such as computer readable instructions, data structures, program modules, or the like. Computer storage media are tangible and mutually exclusive to communication media. Computer storage media are implemented in hardware and exclude carrier waves and propagated signals. Computer storage media for purposes of this disclosure are not signals per se. Exemplary computer storage media include hard disks, flash drives, solid-state memory, phase change random-access memory (PRAM), static random-access memory (SRAM), dynamic random-access memory (DRAM), other types of random-access memory (RAM), read-only memory (ROM), electrically erasable programmable read-only memory (EEPROM), flash memory or other memory technology, compact disk read-only memory (CD-ROM), digital versatile disks (DVD) or other optical storage, magnetic cassettes, magnetic tape, magnetic disk storage or other magnetic storage devices, or any other non-transmission medium for storing information for access by a computing device. In contrast, communication media typically embody computer readable instructions, data structures, program modules, or the like in a modulated data signal such as a carrier wave or other transport mechanism and include any information delivery media.

Having described aspects of the disclosure in detail, it will be apparent that modifications and variations are possible without departing from the scope of aspects of the disclosure as defined in the appended claims. As various changes could be made in the above constructions, products, and methods without departing from the scope of aspects of the disclosure, it is intended that all matter contained in the above description and shown in the accompanying drawings shall be interpreted as illustrative and not in a limiting sense.

In examples involving a general-purpose computer, aspects of the disclosure transform the general-purpose computer into a special-purpose computing device when configured to execute the instructions described herein.

It will be understood that the benefits and advantages described above can relate to one embodiment or to several embodiments. The embodiments are not limited to those that solve any or all of the stated problems or those that have any or all of the stated benefits and advantages. It will further be understood that reference to 'an' item refers to one or more of those items.

The term "comprising" is used in this specification to mean including the feature(s) or act(s) followed thereafter, without excluding the presence of one or more additional features or acts.

In some examples, the operations illustrated in the figures are implemented as software instructions encoded on a computer storage medium, in hardware programmed or designed to perform the operations, or both. For example, aspects of the disclosure are implemented as a system on a chip or other circuitry including a plurality of interconnected, electrically conductive elements.

The order of execution or performance of the operations in examples of the disclosure illustrated and described herein is not essential, unless otherwise specified. That is, the operations can be performed in any order, unless otherwise specified, and examples of the disclosure can include additional or fewer operations than those disclosed herein. For example, it is contemplated that executing or performing a particular operation before, contemporaneously with, or after another operation is within the scope of aspects of the disclosure.

As used herein, the term "set" is non-empty, and can also be referred to as a "group."

When introducing elements of aspects of the disclosure or the examples thereof, the articles "a," "an," "the," and "said" are intended to mean that there are one or more of the elements. The terms "comprising," "including," and "having" are intended to be inclusive and mean that there might be additional elements other than the listed elements. The term "exemplary" is intended to mean "an example of." The phrase "one or more of the following: A, B, and C" means "at least one of A and/or at least one of B and/or at least one of C."

Below are specific example implementations offered here without limitation:

While the aspects of the disclosure have been described in terms of various examples with their associated operations, a person skilled in the art would appreciate that a combination of operations from any number of different examples is also within scope of the aspects of the disclosure.

## Claims

1. A system configured to:
receive an encapsulated packet, the encapsulated packet having an inner packet header with internet protocol (IP) header values including an overlay source IP address and an overlay destination IP address, and an outer packet header with IP header values including an underlay source IP address and an underlay destination IP address;
compute a hash based on the IP header values of the inner packet header;
select an appliance IP (AIPA) address from a group of AIPA addresses based on the hash;
replace the underlay destination IP address of the outer packet header with the selected AIPA address to form an updated encapsulated packet; and
forward the updated encapsulated packet to a network appliance corresponding to the selected AIPA address.

2. The system of claim 1, wherein the system is a programmable smart switch comprising a memory and a processor configured to execute instructions stored by the memory, the instructions causing the system to perform the computing of the hash, the selecting of the AIPA based on the hash, and the replacing of the underlay destination IP address with the selected AIPA.

3. The system of claim 1 or 2, at least one of:
wherein the hash is computed based at least on the overlay source IP address and the overlay destination IP address and is symmetric, such that a same hash value is generated when the overlay source IP address and the overlay destination IP addresses are swapped with each other;
wherein the hash is based on a 5-tuple of the inner packet header including the overlay source IP address, the overlay destination IP address, an overlay source port, an overlay destination port, and a protocol;
the system further comprising receiving the group of AIPAs from a manager, the AIPAs in the group of AIPAs corresponding to appliances, a number of the AIPAs in the group of AIPAs determined based on a bandwidth requirement; and
wherein the system is a top-of-rack switch and the encapsulated packet is received from a host in direct communication with the top-of-rack switch.

4. A computerized method for applying policies to network traffic, the method comprising:
receiving a network policy from a user, the network policy including an identification of traffic subject to the network policy and a rule for enforcing on the traffic;
responsive to the receiving of the network policy:
selecting a group of appliance IP addresses (AIPAs) associated with appliances for enforcing the network policy, a number of AIPAs in the group of AIPAs being based on an amount of bandwidth associated with the traffic;
configuring the appliances to apply the rule to the traffic; and
applying a configuration to a first hop switch, the configuration including the group of AIPAs, the configuration causing the first hop switch to (i) select an AIPA from the group of AIPAs based on a hash value computed from an overlay packet header of the traffic, and (ii) replace an outer destination IP address of the traffic with the selected AIPA.

5. The method of claim 4, wherein the network policy further includes an identification of a maximum bandwidth for the traffic, and a number of IP addresses in the group of IP addresses is based on the maximum bandwidth for the traffic.

6. The method of claim 4 or 5, wherein the identification of the traffic includes match values, the first hop switch is selected based on the identification of the traffic, the configuration of the first hop switch causing the first hop switch to identify the traffic based on the match values, wherein only the traffic identified using the matched values is modified with the selected AIPA.

7. The method of one of claims 4 to 6, wherein:
the identification of the traffic includes identifiers for a source endpoint and a destination endpoint, the first hop switch is a router for a subnet associated with the source endpoint; and
the method further comprises applying the configuration to a second first hop switch, the second first hop switch being a router for a subnet associated with the destination endpoint; and, the configuration causing, for a particular flow that includes traffic from the source endpoint to the destination endpoint and return traffic from the destination endpoint to the source endpoint, the return traffic to pass through the selected AIPA.

8. The method of one of claims 4 to 7, wherein the first hop switch is a layer 3 top-of-rack switch, the traffic comprising traffic originating from a virtual machine residing on a host in communication with the first hop switch.

9. The method of one of claims 4 to 8, wherein the first hop switch is configured to compute hash values for the traffic based on an overlay source **IP** address, an overlay destination **IP** address, an overlay source port, an overlay destination port, and an overlay protocol of the packet, thereby consistently directing packets associated with a flow to the AIPA.

10. The method of claim 9 wherein computed hash value is insensitive to a direction of the traffic such that the hash value is same after reversing source and destination **IP** addresses in the overlay packet header.

11. The method of one of claims 4 to 10, at least one of:
further comprising, in response to an increase or decrease in bandwidth consumption of the traffic, adding or removing, respectively, one or more AIPAs from the group of AIPAs; and
further comprising configuring the appliances so that a particular appliance that receives the packet computes the hash value on the received packet to ensure that the received packet was correctly transmitted to the particular appliance and, in response to detecting that the packet was incorrectly transmitted to the particular appliance, to forward packet to the correct appliance.

12. A computer readable data storage medium embodying program instructions for execution by a processor, the program instructions causing the processor to:
receive, from a user, a network policy, the network policy including an identification of traffic subject to the network policy and a rule to be enforced on the traffic;
responsive to the receiving of the policy:
select a group of appliance IP addresses (AIPAs) associated with appliances for enforcing the policy, a number of AIPAs in the group of AIPAs being based on an amount of bandwidth consumed by the traffic;
configure the appliances to apply the rule to the traffic; and
apply a configuration to a first hop switch, the configuration including a group of AIPAs, the configuration causing the first hop switch to (i) select an AIPA from the group of AIPAs based on a computation of a hash from an overlay packet header value of the traffic, and (ii) replace an outer destination IP address of the traffic with the selected AIPA.

13. The computer readable storage medium of claim 12, wherein the identification of the traffic includes match values, the first hop switch is selected based on the identification of the traffic, and the configuration of the first hop switch causes the first hop switch to identify the traffic based on the match values, wherein only the traffic that is identified using the match values is modified with the selected AIPA.

14. The computer readable data storage medium of claim 12 or 13, wherein:
the identification of the traffic includes identifiers for a source endpoint and a destination endpoint; and
the instructions are further configured to cause the processor to apply the configuration to a second first hop switch, the second first hop switch being a router for a subnet associated with the destination endpoint, the configuration causing, for a particular flow that includes traffic from the source endpoint to the destination endpoint and return traffic from the destination endpoint to the source endpoint, the return traffic to pass through the selected AIPA.

15. The computer readable data storage medium of one of claims 12 to 14, at least one of:
wherein the first hop switch is a layer 3 top-of-rack switch, the traffic comprising traffic originating from a virtual machine residing on a host in communication with the first hop switch; and
wherein the instructions further cause the processor to, in response to an increase or decrease in bandwidth consumption of the traffic, add or remove, respectively, one or more AIPAs from the group of AIPAs.
